# EUROPEAN PATENT SPECIFICATION

(11) **EP 4 371 742 B1**
(45) Date of publication and mention of the grant of the patent: **31.12.2025**
(21) Application number: 22207956.8
(22) Date of filing: 17.11.2022
(51) Int. Cl.: B29C 65/18, B29C 65/10, B65B 51/26, B65B 51/10

(54) **SEALING DEVICE, PACKAGING MACHINE AND METHOD FOR OPERATING A SEALING DEVICE**
SIEGELVORRICHTUNG, VERPACKUNGSMASCHINE UND VERFAHREN ZUM BETREIBEN EINER SIEGELVORRICHTUNG
DISPOSITIF DE SCELLAGE, MACHINE D'EMBALLAGE ET PROCÉDÉ DE FONCTIONNEMENT D'UN DISPOSITIF DE SCELLAGE

(43) Date of publication of application: 22.05.2024
(73) Proprietor: Syntegon Packaging Solutions B.V., 6001 SE Weert (NL)
(72) Inventor: Kok, Tom, 6001 SE Weert (NL); Blokker, Niki, 6001 SE Weert (NL); Verboeket, Tim, 6001 SE Weert (NL)
(74) Representative: Novagraaf Group

(56) References cited:
- DE-A1- 1 929 871
- JP-A- 2002 193 217
- US-A- 4 009 551

## Description

### Prior Art

The invention relates to a sealing device for sealing a package or a packaging material, a packaging machine and a method for operating a sealing device, comprising: at least one sealing unit; at least one heating unit for generating heat for the at least one sealing unit; and a control unit for controlling at least the heating unit. Sealing devices of this type have already been proposed.

Such known sealing devices can comprise a temperature sensor for controlling a sealing temperature of the sealing unit. These temperature sensors are usually not configured to measure a sealing surface directly as they are arranged at a distance to the sealing surface of the sealing unit, in particular due to mechanical constraints. Therefore, a temperature difference will occur between the temperature measurement with the temperature sensor and the sealing surface. This temperature difference can also vary depending on a sealing unit type and the thermodynamic behavior. Also, the temperature difference is different during a sealing mode of the sealing unit and an idle state of the sealing unit. Due to the aspects just listed, there may be fluctuations in the quality of the sealing seams.

Documents DE 19 29 871 A1 and JP 2002-193217 A disclose sealing devices for sealing a package or a packaging material, wherein the known sealing devices each comprise at least one sealing unit, at least one heating unit for generating heat for the at least one sealing unit and a control unit for controlling at least the heating unit, wherein the control unit is configured to automatically adjust a value of a correction parameter that influences the setpoint temperature of the heating unit depending on an operation state of the sealing unit. The sealing units of the known sealing devices are embodied as contact-based sealing units. Document US4009551 discloses a sealing device for sealing a package with a hot air sealing unit.

A task of the invention could be, in particular, to provide a sealing device, a packaging machine and a method for operating a sealing device with improved properties regarding a sealing quality. According to the invention, the task is solved by the features of claim 1, claim 7 and claim 8 respectively, while advantageous embodiments and further developments can be taken from the subclaims.

### Disclosure of the invention

The invention is based on a sealing device for sealing a package or a packaging material, comprising: at least one sealing unit; at least one heating unit for generating heat for the at least one sealing unit; and a control unit for controlling at least the heating unit, wherein the control unit is configured to automatically adjust a value of a correction parameter that influences the setpoint temperature of the heating unit depending on an operation state of the sealing unit.

It is proposed that the sealing unit is implemented as a hot-air sealing unit, with a value of the correction parameter at least temporarily decreasing after a starting time of the sealing unit. Advantageously, a sealing temperature can be adjusted automatically. Advantageously, a precise adjustment of the sealing temperature can be achieved depending on the operation state of the sealing unit. It is possible to realize a particularly high seal quality. It is possible to counteract the creation of inferior sealing seams. Advantageously, the sealing temperature can be set particularly conveniently.

Preferably the sealing unit is configured to seal a package or a packaging material. By "configured" shall be understood specially set up, specially implemented and/or specially equipped. By the fact that an object is configured to perform a certain function, it shall be understood that the object fulfills and/or executes this certain function in at least one application and/or operating state. The sealing unit can comprise one sealing element, two sealing elements or more than two sealing elements. The sealing element is implemented, for example, as a sealing jaw, as a tube or the like. The heating unit is in particular configured to generate heat for sealing the package or the packaging material. The heating unit can comprise at least one heating element. The heating element is implemented, for example, as an electrical heating element or as another heating element that appears reasonable to a person skilled in the art. The heating unit, in particular the heating element, is preferably configured to heat the sealing unit, in particular the sealing element.

The control unit preferably comprises at least a processor and a storage element as well as an operation program stored on the storage element. The storage element is preferably implemented as a digital storage element, for example as a hard disk or the like. The control unit is preferably configured to control a sealing process, in particular to control the heating unit and/or the sealing unit. In particular, the control unit is configured to control a movement of the sealing unit, preferably the sealing elements implemented as sealing jaws, and/or a sealing material, preferably a packaging material or a package. The control unit is preferably configured to control an output power of the heating unit, in particular in dependence of the setpoint temperature. In particular, the control unit is configured to control the heating unit, preferably the setpoint temperature of the heating unit. The control unit is in particular configured to adjust the setpoint temperature of the heating unit in dependence of the correction parameter. It is conceivable that the sealing device comprises at least one temperature sensor. The temperature sensor is preferably arranged on the sealing unit, in particular on the sealing element. The temperature sensor is preferably configured to detect a temperature of the sealing element, in particular of an area of the sealing element in which the temperature sensor is arranged. Alternatively or additionally, it is also conceivable that at least one temperature sensor is arranged on a forming tube of a packaging machine comprising the sealing device. The temperature sensor is in particular spaced apart from a sealing area of the sealing unit and/or spaced apart from the heating unit. It is alternatively conceivable that the sealing device is implemented free from temperature sensors. The temperature sensor is preferably connected to the control unit by means of data, in particular wireless and/or cable-based. It is conceivable that the control unit controls the heating unit and/or the sealing unit in dependence of the temperature sensor.

An automatic adjustment of a value of the correction parameter that influences the setpoint temperature of the heating unit is in particular different from a mere presence or absence of the correction value due to a switching on or off of the sealing unit and/or the heating unit.

The correction parameter is preferably intended to compensate for a temperature difference between the heating unit and the sealing area of the sealing unit. Preferably a packaging material or a package, in particular a part to be sealed of the packaging material or the package, is arranged in the sealing area of the sealing unit at least during sealing. The sealing area is in particular spaced apart from the heating unit. The correction parameter can be a temperature correction variable for the setpoint temperature of the heating unit, a calibration variable for the temperature sensor or the like.

Preferably, the operation state comprises information about whether the sealing unit is in a sealing mode or in an idle state. The sealing mode preferably corresponds to a sealing operation of the sealing unit. In the sealing mode the sealing unit preferably continuously seals packages or a packaging material, in particular including interruptions due to material conveying from and/or to the sealing unit. In the sealing mode the heating unit is preferably configured to generate heat for the sealing unit. In the idle state of the sealing unit the sealing unit is preferably in a resting state. While the sealing unit is in the idle state the heating unit is preferably in a resting state or is operated to generate the setpoint temperature. In the case of the sealing unit implemented as a contact-based sealing unit the heating unit is operated to generate the setpoint temperature in the idle state of the sealing unit. In the case of the sealing unit implemented as a hot-air sealing unit the heating unit is preferably in a resting state. For the sealing unit implemented as hot-air sealing unit it is conceivable that the heating unit is operated to generate an idle temperature while in resting state, in particular while the sealing unit is in the idle state, or that an operation of the heating unit to generate heat is interrupted while in resting state, in particular while the sealing unit is in the idle state. In the idle state the sealing unit is preferably configured to interrupt a sealing operation of packages or package material. Additionally or alternatively, it is also conceivable that the operation state comprises information about sealing parameters, e.g. a sealing duration, an operating speed, an information about the material to be sealed or the like. The control unit is in particular configured to adjust the correction parameter in the sealing mode of the sealing unit differently from an adjustment of the correction parameter in the idle state of the sealing unit.

It is also proposed that the control unit is configured for automatically adjusting a value of the correction parameter, using a function that depends on the operation state of the sealing unit. Advantageously, a value of the correction parameter can be set particularly easily. A function behavior of the function that determines a value of the correction parameter in the sealing mode of the sealing unit is in particular different from a function behavior of the function in the idle state of the sealing unit.

Furthermore, it is proposed that the control unit is configured for automatically adjusting a value of the correction parameter by using a leaky integrator equation. Advantageously, a particularly suitable automatic adjustment of a value of the correction parameter can be made. It is possible to achieve a uniformly good sealing quality. A leaky integrator equation is in particular a specific differential equation, preferably used to describe a component or system that takes the integral of an input, but gradually leaks a small amount of input over time. Preferably the correction parameter is described with the leaky integrator equation. A basic formula for the leaky integrator equation is in particular dT/dt = -k·T + C. T corresponds in particular to the correction parameter. C corresponds in particular to an input parameter. The input parameter, in particular for the sealing unit implemented as hot-air sealing unit, preferably is equal to zero if the sealing unit is in the sealing mode. The input parameter, in particular for the sealing unit implemented as hot-air sealing unit, preferably is equal k·ΔT if the sealing unit is in the sealing mode. ΔT is in particular a temperature difference. k is in particular a time constant. A value of the time constant k is different in particular for a heating-up time of at least the sealing unit and a cooling-down time of at least the sealing unit. A value of the time constant k for the heating-up time is for example equal to 5 divided by the heating-up time. A value of the time constant k for the cooling-down time is for example equal to 5 divided by the cooling-down time. Alternatively, other values for the time constant k for the cooling-down time and the heating-up time are conceivable.

Beyond this it is proposed that the control unit is configured for determining a value of the correction parameter by a, in particular the already aforementioned, temperature difference, a, in particular the already aforementioned, heating-up time and/or a, in particular the already aforementioned, cooling-down time. Advantageously, an automatic adjustment of the correction value can be set particularly easily and/or conveniently. Advantageously, an automatic adjustment of the correction parameter can be adapted particularly easily and/or precisely to different conditions. Preferably, the temperature difference corresponds to a temperature difference between the sealing area and the setpoint temperature of the heating unit, in particular for the sealing unit implemented as a contact-based sealing unit. Preferably, the temperature difference corresponds to a temperature difference between the sealing area and the setpoint temperature of the heating unit, in particular for the sealing unit implemented as a contact-based sealing unit. The temperature difference, preferably for the sealing unit implemented as a hot-air sealing unit, in particular represents a temperature value needed to compensate for a temperature of a work environment of the sealing unit. The heating-up time in particular corresponds to a heating-up time of the sealing device, preferably at least the sealing unit. The heating-up time preferably corresponds to a time period at least the sealing unit, in particular the sealing device, takes to reach a thermal equilibrium state, in particular with the work environment of the sealing unit, after a starting time of the sealing mode, in particular a sealing operation of the sealing unit and/or the heating unit. The cooling-down time in particular corresponds to a cooling-down time of the sealing device, preferably at least the sealing unit. The cooling-down time preferably corresponds to a time period at least the sealing unit, in particular the sealing device, takes to reach a thermal equilibrium state, in particular with the work environment of the sealing unit, after a stopping time of the sealing mode, in particular a sealing operation of the sealing unit and/or the heating unit or a starting time of the idle state. The temperature difference, the cooling-down time and/or the heating-up time are/is preferably determined empirically, for example the temperature difference, the cooling-down time and/or the heating-up time are set manually by a user, for example via an input unit. It is conceivable that the input unit is part of the sealing device, the packaging machine comprising the sealing device or an external device. The input unit for example can comprise a touchscreen, a button, a keypad, a turn wheel or the like. The external device can be implemented as a laptop, a smartphone, a cloud, a server, a central computer, a remote control or the like. The external device is preferably connectable to the control unit by means of data, in particular wireless and/or cable-based. Alternatively, it is also conceivable that the temperature difference, the heating-up time and/or the cooling down time are/is determined by a model of the sealing device or the like.

It is further proposed that the control unit is configured for automatically adjusting a value of the temperature difference depending on the operating speed of the sealing unit. Advantageously, a change in the temperature difference due to a change in operating speed of the sealing unit can be taken into account particularly easily and conveniently when determining the correction parameter. It is possible to achieve a particularly precise adjustment of the correction parameter for different operating speeds of the sealing unit. Advantageously, a particularly high sealing quality can be achieved at different operating speeds of the sealing unit. It can be advantageously avoided that a value for the temperature difference has to be entered manually by a user when changing an operating speed. An adjustment of the temperature difference can be realized particularly fast. The control unit is in particular configured for automatically adjusting a value of the temperature difference depending on the operating speed of the sealing unit when the sealing unit is implemented as a contact-based sealing unit. Preferably, the temperature difference has a linear dependence on the operating speed of the sealing unit. Particularly preferably, the temperature difference is set by the user initially for a specific operating speed of the sealing unit, so that preferably the control unit is configured to adjust the temperature difference automatically according to the linear dependence of the temperature difference on the operating speed of the sealing unit. The operating speed of the sealing unit corresponds in particular to the sealing speed of the sealing unit, for example a number of packages sealed in a specific time period, a number of created sealing seam in a specific time period or the like.

It is moreover proposed that the correction parameter is a, in particular the already aforementioned, temperature correction variable to the setpoint temperature of the heating unit. Advantageously, a sealing temperature can be automatically adjusted on a particularly short way in terms of data.

Beyond this it is proposed, in particular in a conceivable alternative embodiment, that the control unit is configured for automatically adjusting a value of the correction parameter on the basis of a model. Advantageously, a particularly precise adjustment of a value of the correction parameter can be realized. It is possible to take into account a wide variety of different factors influencing the sealing behavior of the sealing unit for the determination of a value of the correction parameter. In particular, the model takes into account at least the operation state of the sealing unit. Additionally or alternatively, the model takes into account at least one further parameter of the sealing unit, in particular different from the operation state of the sealing unit, at least one parameter regarding the heating unit, at least one parameter regarding a machine setting of another machine unit of the sealing device and/or a packaging machine comprising the sealing device. The model can be a deterministic model, a stochastic model, a model generated at least partially by machine learning (a neural network model), a combination thereof or the like. The deterministic model for example is a simulation model of the sealing device.

According to a disclosure which does not form part of the invention, the sealing unit is implemented as a contact-based sealing unit, with a value of the correction parameter at least temporarily increasing after a starting time of the sealing unit, in particular after a starting time of the sealing mode. Advantageously, a temperature behavior of a contact-based sealing unit can be taken into account for the automatic adjustment of a value of the correction parameter. It is possible to achieve a particularly precise sealing unit for high quality sealing with a contact-based sealing unit. The sealing unit implemented as a contact-based sealing unit comprises preferably at least two sealing elements, particularly preferred implemented as sealing jaws. According to an alternative disclosure which does not form part of the invention, it is also conceivable that the sealing unit implemented as a contact-based sealing unit comprises only one sealing element, in particular only one sealing jaw. Preferably the at least two sealing elements are configured to seal a packaging material, which is in particular arrangeable between the at least two sealing elements. Each of the at least two sealing elements has in particular a sealing surface. Preferably, the sealing surfaces of the at least two sealing elements are arranged facing each other. The sealing surfaces of the at least two sealing elements are preferably in contact with the packaging material in the sealing position in order to create a sealing in the packaging material. In particular, the sealing surfaces of the at least two sealing elements run at least substantially parallel to each other. The term "substantially parallel" is here in particular to mean an orientation of a direction relative to a reference direction, in particular in a plane, wherein the direction has a deviation from the reference direction that is smaller than 8°, advantageously smaller than 5° and especially advantageously smaller than 2°. Preferably, a value of the correction parameter is increased after a starting time of the sealing unit, in particular after a starting time of the sealing mode, at least until the sealing unit, which is in particular implemented as a contact-based sealing unit, reaches a thermal equilibrium state, in particular with the work environment of the sealing unit. A value of the correction parameter is preferably decreased after a stopping time of the sealing unit, in particular after a stopping time of the sealing mode or a starting time of the idle state, wherein the sealing unit is in particular implemented as a contact-based sealing unit. Preferably, a value of the correction parameter is decreased after a stopping time of the sealing unit, in particular after a stopping time of the sealing mode or a starting time of the idle state, at least until the sealing unit, which is in particular implemented as a contact-based sealing unit, reaches a thermal equilibrium state, in particular with the work environment of the sealing unit. A value of the correction parameter is in particular positive.

According to the invention, the sealing unit is implemented as a hot-air sealing unit, with a value of the correction parameter at least temporarily decreasing after a starting time of the sealing unit, in particular after a starting time of the sealing mode. Advantageously, a temperature behavior of a hot-air sealing unit can be taken into account for the automatic adjustment of a value of the correction parameter. It is possible to achieve a particularly precise sealing unit for high quality sealing with a hot-air sealing unit. The sealing unit implemented as a hot-air sealing unit comprises at least one sealing element which is implemented as a tube. The sealing element of the hot-air sealing unit can be heated by the heating unit. It is conceivable that the sealing element of the hot-air sealing unit is part of the heating unit, in particular that the sealing element corresponds to a heating element of the heating unit. The sealing element of the hot-air sealing unit comprises preferably a multitude of air outlets. Alternatively, it is also conceivable that the sealing element of the hot-air sealing unit comprises only one air outlet. The air outlet can have a circle-shaped form, a slit-like form or another form that seems reasonable to a person skilled in the art. The sealing element of the hot-air sealing unit is in particular configured to guide an air stream through an inner area of the sealing element. The heating unit, in particular the sealing element, is preferably configured to heat air contained in the sealing element, preferably in the tube. The heated air stream in the sealing element is preferably configured to pass through the air outlets to seal a package or a packaging material. The sealing device, in particular the heating unit, preferably comprises a ventilation unit to generate an air stream through the sealing unit, in particular the sealing element of the hot-air sealing unit. The sealing unit implemented as a hot-air sealing unit comprises preferably a counterpart element on which the packaging material or the package is arranged during sealing. The counterpart element is for example implemented by the forming tube of the packaging machine comprising the sealing device. Preferably, a value of the correction parameter is decreasing after a starting time of the sealing unit, in particular after a starting time of the sealing mode, at least until the sealing unit, which is in particular implemented as a hot-air sealing unit, reaches a thermal equilibrium state, in particular with the work environment of the sealing unit. A value of the correction parameter is preferably increasing after a stopping time of the sealing unit, in particular after a stopping time of the sealing mode or a starting time of the idle state, wherein in particular the sealing unit is implemented as a hot-air sealing unit. Preferably, for the sealing unit implemented as hot-air sealing unit, a value of the correction parameter is preferably increasing after a stopping time of the sealing unit, in particular after a stopping time of the sealing mode or a starting time of the idle state, but not applied as the heating unit is in the resting state while the sealing unit is in the idle state. Preferably, a value of the correction parameter is increasing after a stopping time of the sealing unit, in particular after a stopping time of the sealing mode or a starting time of the idle state, at least until the sealing unit, which is in particular implemented as a hot-air sealing unit, reaches a thermal equilibrium state, in particular with the work environment of the sealing unit.

Furthermore, a, in particular the already aforementioned, packaging machine, in particular a vertical form fill sealing machine or a horizontal form fill sealing machine, comprising a sealing device according to the invention is proposed. Advantageously, a sealing temperature can be adjusted automatically. Advantageously, a precise adjustment of the sealing temperature can be achieved depending on the operation state of the sealing unit. It is possible to realize a particularly high seal quality. It is possible to counteract the creation of inferior sealing seams. Advantageously, the sealing temperature can be set particularly conveniently. It is conceivable that the packaging machine comprises a material conveying unit to convey packages or package material to and/or from the sealing unit. The packaging machine can comprise a folding unit to bring material into a state ready for sealing by folding it. The sealing unit can be implemented as a longitudinal drag sealing unit, as a longitudinal intermittent sealing unit, as a transverse sealing unit or the like.

Moreover, the invention is based on a method for operating a sealing device, in particular the already aforementioned sealing device, the sealing device comprising: at least one sealing unit and at least one heating unit for generating heat for the at least one sealing unit. It is proposed that a value of a, in particular the already aforementioned, correction parameter influencing the setpoint temperature of the heating unit is automatically adjusted depending on an operation state of the sealing unit, which is implemented as a hot-air sealing unit, with a value of the correction parameter at least temporarily decreasing after a starting time of the sealing unit. Advantageously, a sealing temperature can be adjusted automatically. Advantageously, a precise adjustment of the sealing temperature can be achieved depending on the operation state of the sealing unit. It is possible to realize a particularly high seal quality. It is possible to counteract the creation of inferior sealing seams. Advantageously, the sealing temperature can be set particularly conveniently.

The sealing device according to the invention, the packaging machine according to the invention and/or the method according to the invention shall herein not be limited to the application and implementation described above. In particular, in order to fulfill a functionality that is described here, the sealing device according to the invention, the packaging machine according to the invention and/or the method according to the invention may comprise a number of individual elements, components and units as well as method steps that differs from a number given here. Moreover, concerning the value ranges given in the present disclosure, values within the limits mentioned shall also be considered to be disclosed and to be usable as applicable.

### Drawing

Further advantages will become apparent from the following description of the drawing. In the drawing two exemplary embodiments of the invention are illustrated. The drawing, the description and the claims contain a plurality of features in combination. Someone skilled in the art will purposefully also consider the features individually and will find further expedient combinations.

Es zeigen:
- Fig. 1: A packaging machine with a sealing device according to the invention in a front view,
- Fig. 2: a sealing unit according to the invention of the sealing device from figure 1 in a perspective view,
- Fig. 3: a schematic representation of a function profile of a correction parameter influencing a setpoint temperature of a heating unit of the sealing device according to the invention,
- Fig. 4: a schematic flow chart of a method for operating the sealing device according to the invention,
- Fig. 5: a sealing device not according to the invention in a schematic representation and
- Fig. 6: a schematic representation of a function profile of a correction parameter influencing a setpoint temperature of a heating unit of the sealing device not according to the invention.

### Description of the exemplary embodiments

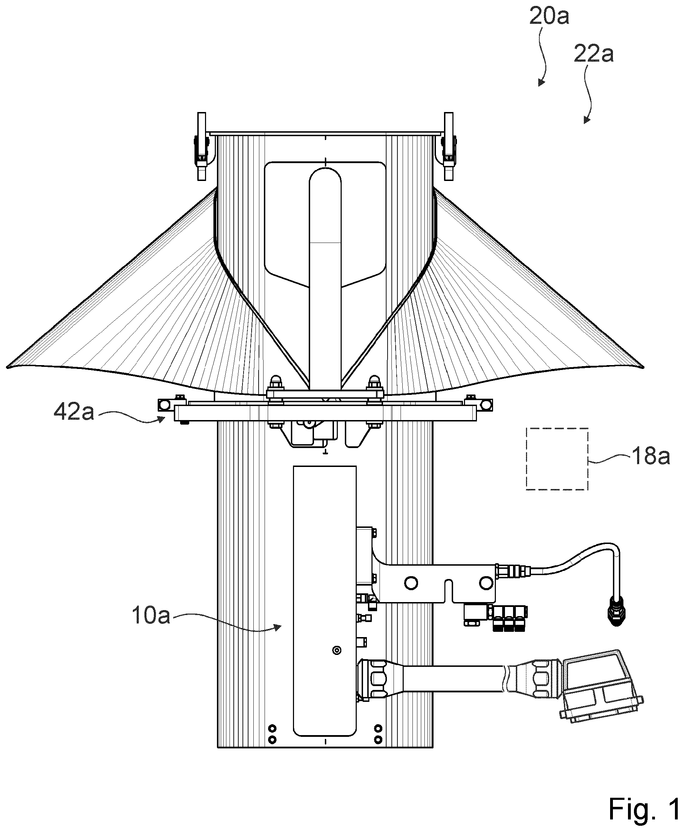

In figure 1 a packaging machine 20a is shown. The packaging machine 20a is implemented as a vertical form fill sealing machine. Alternatively, it is also conceivable that the packaging machine 20a is implemented as a horizontal form fill sealing machine or another, in particular different from a form fill sealing machine, packaging machine that seems reasonable to a person skilled in the art. The packaging machine 20a comprises a sealing device 10a for sealing a package or a package material. The packaging machine 20a comprises a material conveying unit 42a to convey packages or package material to and/or from the sealing unit 10a. The packaging machine 20a comprises a folding unit 22a to bring packaging material into a state ready for sealing by folding it.

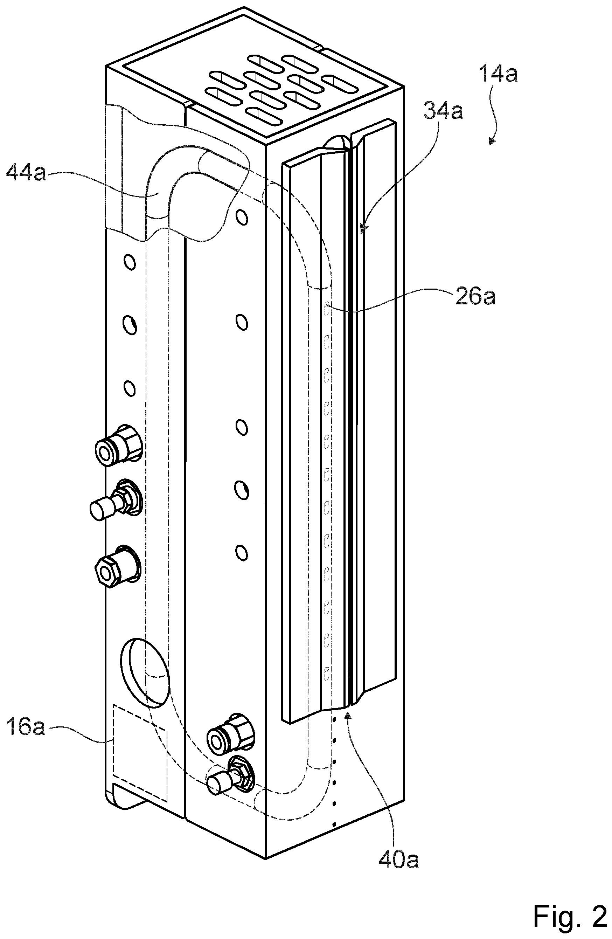

The sealing device 10a comprises at least one sealing unit 14a. The sealing unit 14a is configured to seal a package or a packaging material. The sealing unit 14a is implemented as a hot-air sealing unit 14a. The sealing unit 14a comprises one sealing element 44a (cf. figure 2). Alternatively, it is also conceivable that the sealing unit 14a comprises two sealing elements 44a or more than two sealing elements 44a. The sealing element 44a is implemented as a tube.

The sealing device 10a comprises at least one heating unit 16a for generating heat for the at least one sealing unit 14a. The heating unit 16a is configured to generate heat for sealing the package or the packaging material. The heating unit 16a comprises at least one heating element (not shown here). The heating element is implemented, for example, as an electrical heating element or as another heating element that appears reasonable to a person skilled in the art. The heating unit 16a, in particular the heating element, is configured to heat the sealing element 44a. It is also conceivable that the sealing element 44a is part of the heating unit 16a, in particular that the sealing element 44a corresponds to the heating element of the heating unit 16a.

The sealing device 10a comprises a control unit 18a for controlling at least the heating unit 16a. The control unit 18a comprises at least a processor (not shown here) and a storage element (not shown here) as well as an operation program stored on the storage element. The storage element is preferably implemented as a digital storage element, for example as a hard disk or the like. The control unit 18a is configured to control a sealing process, in particular to control the heating unit 16a and/or the sealing unit 14a. The control unit 18a is configured to control the heating unit 16a, preferably the setpoint temperature of the heating unit 16a. The control unit 18a is configured to control an output power of the heating unit 16a, in particular in dependence of the setpoint temperature.

The control unit 18a is configured to automatically adjust a value of a correction parameter that influences the setpoint temperature of the heating unit 16a depending on an operation state of the sealing unit 14a. An automatic adjustment of a value of the correction parameter that influences the setpoint temperature of the heating unit 16a is in particular different from a mere presence or absence of the correction value due to a switching on or off of the sealing unit 14a and/or the heating unit 16a. The control unit 18a is configured to adjust the setpoint temperature of the heating unit 16a in dependence of the correction parameter.

The sealing element 44a comprises a multitude of air outlets 26a. Alternatively, it is also conceivable that the sealing element 44a comprises only one air outlet 26a. The air outlets 26a have a slit-like form. Alternatively, it is also conceivable that at least part of the air outlets 26a have a circle-shaped form or another form that seems reasonable to a person skilled in the art. The sealing element 44a is configured to guide an air stream through an inner area the sealing element 44a. The heating unit 16a, in particular the sealing element 44a, is configured to heat air contained in the sealing element 44a, preferably in the tube. The heated air stream in the sealing element 44a is configured to pass through the air outlets 26a to seal a package or a packaging material. The sealing unit 14a comprises a housing with an outlet slit 40a. The air outlets 26a are aligned with the outlet slit 40a. The sealing element 44a is arranged in the housing. The outlet slit 40a defines a sealing area 34a of the sealing unit 14a. The sealing device 10a, in particular the heating unit 16a, comprises a ventilation unit (not shown here) or the like to generate an air stream through the sealing unit 14a, in particular the sealing element 44a. The sealing unit 14a comprises preferably a counterpart element on which the packaging material or the package is arranged during sealing. The counterpart element is for example implemented by a forming tube of the packaging machine 20a or the like.

The correction parameter is intended to compensate for a temperature difference between the heating unit 16a and the sealing area 34a of the sealing unit 14a. A packaging material or a package, in particular a part to be sealed of the packaging material or the package, is arranged in the sealing area 34a at least during sealing. The packaging material or the package is spaced apart from the outlet slit 40a, in particular spaced apart from the housing of the sealing unit 14a. The packaging material or the package has, in particular at least during sealing, a distance from the outlet slit 40a, in particular from the housing, of approximately 0.5 mm. Alternatively, it is also conceivable that a distance between the outlet slit 40a, in particular the housing, and the packaging material or the package during sealing is different from 0.5 mm. The sealing area 34a is spaced apart from the heating unit 16a. The correction parameter is a temperature correction variable to the setpoint temperature of the heating unit 16a.

The operation state of the sealing unit 14a comprises information about whether the sealing unit 14a is in a sealing mode or in an idle state. The sealing mode corresponds to a sealing operation of the sealing unit 14a. In the sealing mode the sealing unit 14a preferably continuously seals packages or a packaging material, in particular including interruptions due to material conveying from and/or to the sealing unit 14a. In the sealing mode the heating unit 16a is configured to generate heat for the sealing unit 14a. In the idle state of the sealing unit 14a the sealing unit 14a and/or the heating unit 16a are/is in a resting state. The heating unit 16a is operated to generate an idle temperature while in resting state, in particular while the sealing unit 14a is in the idle state, or that an operation of the heating unit 16a to generate heat is interrupted while in resting state, in particular while the sealing unit 14a is in the idle state. In the idle state the sealing unit 14a is configured to interrupt a sealing operation of packages or package material. Additionally or alternatively, it is also conceivable that the operation state comprises information about sealing parameters, e.g. a sealing duration, an operating speed, an information about the material to be sealed or the like.

The control unit 18a is configured to adjust the correction parameter in the sealing mode of the sealing unit 14a differently from an adjustment of the correction parameter in the idle state of the sealing unit 14a. The control unit 18a is configured for automatically adjusting a value of the correction parameter, using a function that depends on an operation state of the sealing unit 14a. A function behavior of the function that determines a value of the correction parameter in the sealing mode of the sealing unit 14a is in particular different from a function behavior of the function in the idle state of the sealing unit 14a. The control unit 18a is configured for automatically adjusting a value of the correction parameter by using a leaky integrator equation. The correction parameter is described with the leaky integrator equation.

A basic formula for the leaky integrator equation is in particular dT/dt = -k·T + C. T corresponds in particular to the correction parameter. C corresponds in particular to an input parameter. The input parameter preferably is equal to zero if the sealing unit is in the sealing mode. The input parameter preferably is equal k·ΔT if the sealing unit 14a is in the sealing mode. ΔT is in particular a temperature difference. k is in particular a time constant. A value of the time constant k is different in particular for a heating-up time of at least the sealing unit 14a and a cooling-down time of at least the sealing unit 14a. A value of the time constant k for the heating-up time is for example equal to 5 divided by the heating-up time. A value of the time constant k for the cooling-down time is for example equal to 5 divided by the cooling-down time. Alternatively, other values for the time constant k for the cooling-down time and the heating-up time are conceivable.

Alternatively, the control unit 18a is configured for automatically adjusting a value of the correction parameter on the basis of a model. In particular, the model takes into account at least the operation state of the sealing unit 14a. Additionally or alternatively, the model takes into account at least one further parameter of the sealing unit 14a, in particular different from the operation status of the sealing unit 14a, at least one parameter regarding the heating unit 16a, at least one parameter regarding a machine setting of another machine unit of the sealing device 10a and/or a packaging machine 20a. The model can be a deterministic model, a stochastic model, a model generated by machine learning (a neural network model), a combination thereof or the like. The deterministic model for example is a simulation model of the sealing device 10a.

The control unit 18a is configured for determining a value of the correction parameter the temperature difference, the heating-up time and/or the cooling-down time. The temperature difference represents a temperature value needed to compensate for a temperature of a work environment of the sealing unit 14a.. The heating-up time in particular corresponds to a heating-up time of the sealing device 10a, preferably at least the sealing unit 14a. The heating-up time corresponds to a time period at least the sealing unit 14a, in particular the sealing device 10a, takes to reach a thermal equilibrium state, in particular with the work environment of the sealing unit 14a, after a starting time of the sealing mode, in particular a sealing operation of the sealing unit 14a and/or the heating unit 16a. The cooling-down time in particular corresponds to a cooling-down time of the sealing device 10a, preferably the sealing unit 14a. The cooling-down time corresponds to a time period the sealing unit 14a, in particular the sealing device 10a, takes to reach a thermal equilibrium state, in particular with the work environment of the sealing unit 14a, after a stopping time of a sealing mode, in particular a sealing operation of the sealing unit 14a and/or the heating unit 16a or a starting time of the idle state.

The temperature difference, the cooling-down time and/or the heating-up time are/is preferably determined empirically, for example the temperature difference, the cooling-down time and/or the heating-up time are manually set by a user, for example via an input unit (not shown here). It is conceivable that the input unit is part of the sealing device 10a, the packaging machine 20a or an external device. The input unit for example can comprise a touchscreen, a button, a keypad, a turn wheel or the like. The external device can be implemented as a laptop, a smartphone, a cloud, a server, a central computer, a remote control or the like. The external device is preferably connectable to the control unit by means of data, in particular wireless and/or cable-based. Alternatively, it is also conceivable that the temperature difference, the heating-up time and/or the cooling down time are/is determined by a model of the sealing device 10a or the like.

A value of the correction parameter is at least temporarily decreasing after a starting time of the sealing unit 14a, in particular after a starting time of the sealing mode. A value of the correction parameter is decreasing after a starting time of the sealing unit 14a, in particular after a starting time of the sealing mode, at least until the sealing unit 14a reaches a thermal equilibrium state, in particular with the work environment of the sealing unit 14a. A value of the correction parameter is increasing after a stopping time of the sealing unit 14a, in particular after a stopping time of the sealing mode or a starting time of the idle state. A value of the the correction parameter is increasing after a stopping time of the sealing unit 14a, in particular after a stopping time of the sealing mode or a starting time of the idle state, but not applied as the heating unit 16a is in the resting state while the sealing unit 14a is in the idle state. A value of the correction parameter is increasing after a stopping time of the sealing unit 14a, in particular after a stopping time of the sealing mode or a starting time of the idle state, at least until the sealing unit 14a reaches a thermal equilibrium state, in particular with the work environment of the sealing unit 14a.

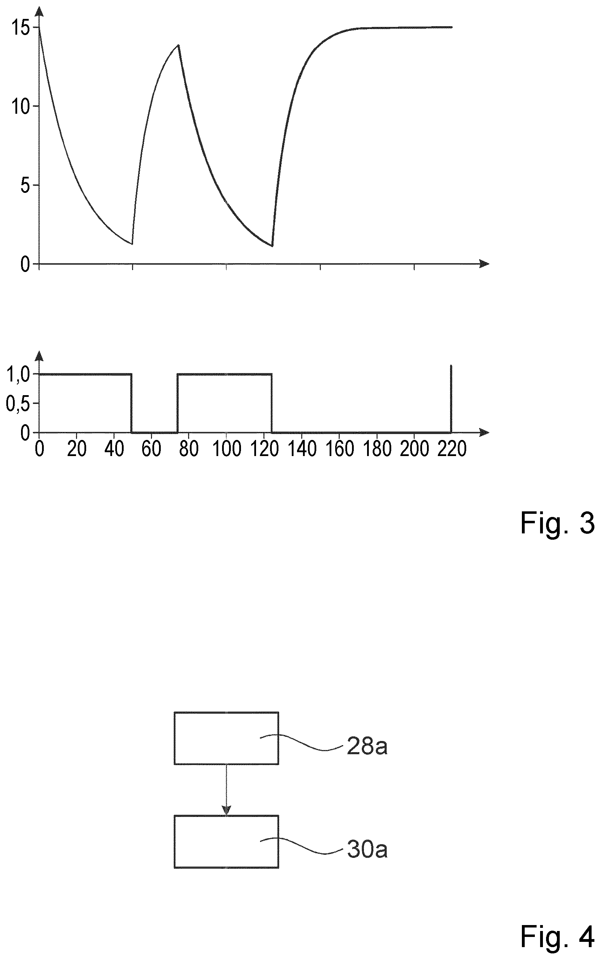

Figure 4 shows schematically a flow chart of a method for operating the sealing device 10a. A value of a correction parameter influencing the setpoint temperature of the heating unit 16a is automatically adjusted depending on the operation state of the sealing unit 14a. In a method step, in particular in a sealing step 28a, the sealing unit 14a is in the sealing mode. In particular in the sealing step 28a, the sealing unit 14a seals a package or packaging material. In the sealing mode the sealing unit 14a continuously seals packages or a packaging material, which are/is preferably conveyed to the sealing device 10a by the material conveying unit 42a. In the sealing step 28a, the control unit 18a automatically adjusts a value of the correction parameter, wherein a value of the correction parameter is increasing after a starting time of the sealing mode, in particular until a thermal equilibrium state of the sealing unit 14a, preferably with the work environment of the sealing unit 14a, is reached. The heating unit 16a is preferably in operation, in particular configured to generate heat for the sealing unit 14a, during the sealing step 28a.

In a method step, in particular in an idle step 30a, the sealing unit 14a is in the idle state, in particular sealing of a package or packaging material by the sealing unit 14a is stopped. An operation of the heating unit 16a is stopped during the idle step 30a, while the control unit 18a is preferably configured to adjust a value of the correction parameter. In the idle step 30a, the control unit 18a automatically adjusts a value of the correction parameter, wherein a value of the correction parameter is decreasing after a stopping time of the sealing mode, in particular until a thermal equilibrium state of the sealing unit 14a, in particular with the work environment of the sealing unit 14a, is reached.

Figure 3 shows an exemplary function profile of the correction parameter applied by the control unit 18a. The y-axis is the upper graph of figure 3 exhibits a value of the correction parameter. The x-axis in the upper graph of figure 3 exhibits the time.

The lower graph exhibits the operation state of the sealing unit 14a, in particular whether the sealing unit 14a is in sealing mode or in the idle state. The x-axis of the lower graph exhibits the time. The x-axis of the lower graph in figure 3 corresponds to the x-axis of the upper graph in figure 3. The y-value in the lower graph of figure 3 equals 1, when the sealing unit 14a is in sealing mode, in particular during sealing of a package or packaging material. The y-value in the lower graph of figure 3 equals 0, when the sealing unit 14a is in the idle state of the sealing unit 14a.

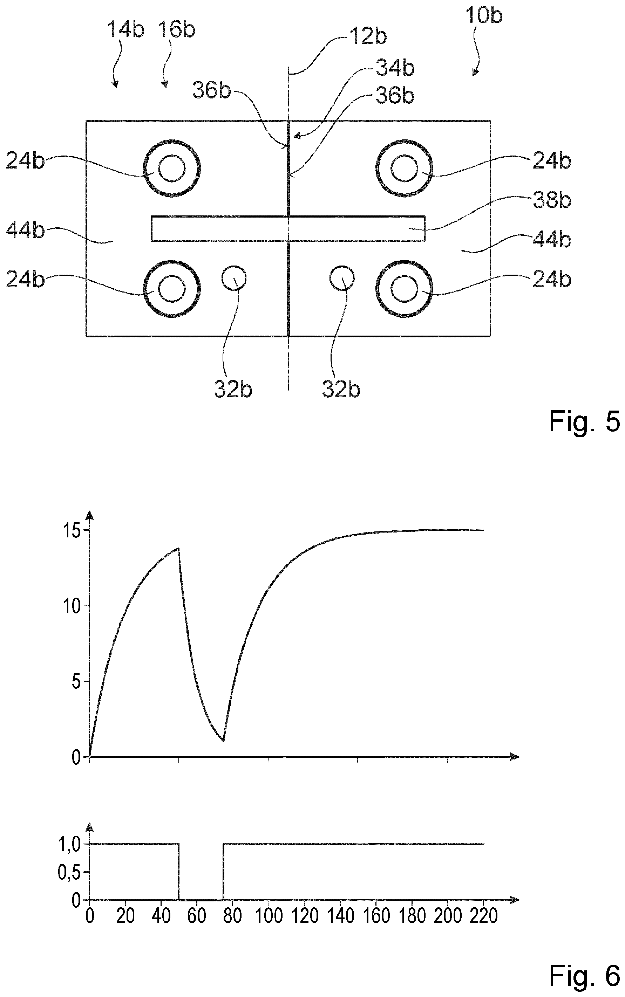

In figures 5 and 6 a further disclosure which is not part of the invention is illustrated. The following description and the drawings are essentially limited to the differences between the exemplary embodiments and further disclosure, wherein as regards identically denominated components, in particular components having the same reference numerals, the drawings and/or the description of the other exemplary embodiment, in particular of figures 1 to 4, may principally be referred to. In order to distinguish between the exemplary embodiments, the letter a has been added to the reference numerals of the exemplary embodiment of figures 1 to 4. In the further disclosure, which is not part of the invention, of figures 5 and 6 the letter a has been substituted by the letter b.

Figure 5 shows a sealing device 10b for sealing a package or a package material. The sealing unit 14b is implemented as a contact-based sealing unit. The sealing device 10b comprises at least one sealing unit 14b. The sealing unit 10b is implemented as a transverse sealing unit. Alternatively, it is also conceivable, that the sealing unit 10b is implemented as a longitudinal drag sealing unit, as a longitudinal intermittent sealing unit or the like.

The sealing unit 14b comprises at least two sealing elements 44b. Alternatively, it is also conceivable that the sealing unit 14b comprises only one sealing element 44b. The sealing elements 44b are implemented as sealing jaws. The sealing elements 44b are configured to seal a packaging material 12b, which is in particular arrangeable between the at least two sealing elements 44b. Each of the at least two sealing elements 44b has a sealing surface 36b. The sealing surfaces 36b of the at least two sealing elements 44b are arranged facing each other. The sealing surfaces 36b of the at least two sealing elements 44b are in contact with the packaging material 12b at least during sealing in order to create a sealing in the packaging material 12b. The sealing surfaces 36b of the at least two sealing elements 44b run at least substantially parallel to each other.

The sealing device 10b comprises at least one heating unit 16b for generating heat for the at least one sealing unit 14b. The heating unit 16b comprises here as an example four heating elements 24b. Alternatively it is also conceivable that the heating unit 16b comprises one heating element 24b, two heating elements 24b, three heating elements 24b or more than four heating elements 24b. Two of the heating elements 24b are arranged on each of the sealing elements 44b.

The sealing device 10b comprises a control unit (not shown here) for controlling at least the heating unit 16b. The control unit is configured to control a movement of the sealing unit 14b, and/or the packaging material 12b. The control unit is configured to control an output power of the heating unit 16b, in particular in dependence of a setpoint temperature of the sealing unit 14b. The heating unit 16b is operated to generate the setpoint temperature in the idle state of the sealing unit 14b.

The sealing device 10b comprises two temperature sensors 32b. Alternatively it is also conceivable that the sealing device 10b comprises one temperature sensor 32b or more than two temperature sensors 32b. One of the temperature sensors 32b is arranged on each of the sealing elements 44b. The temperature sensors 32b are configured to detect a temperature of the respective sealing element 44b, in particular of an area of the respective sealing element 44b in which the respective temperature sensor 32b is arranged. The temperature sensors 32b are each spaced apart from a sealing area 34b of the sealing unit 14b and/or spaced apart from the heating unit 16b, in particular the heating elements 24b. It is alternatively conceivable that the sealing device 10b is implemented free from temperature sensors 32b. The temperature sensors 32b are connected to the control unit by means of data, in particular wireless and/or cable-based. The sealing device 10b comprises a separator element 38b to separate the packaging material before and/or after sealing. The separator element 38b is for example implemented as a blade or the like.

The control unit is configured to automatically adjust a value of a correction parameter that influences the setpoint temperature of the heating unit 16b depending on an operation state of the sealing unit 14b. The correction parameter is a temperature correction variable to the setpoint temperature of the heating unit 16b. Alternatively, it is also conceivable that the correction parameter corresponds to a calibration variable for the temperature sensors 32b with a value of the correction parameter at least temporarily increasing after a starting time of the sealing unit 14b, in particular after a starting time of a sealing mode of the sealing unit 14b. A value of the correction parameter is increasing after a starting time of the sealing unit 14b, in particular after a starting time of the sealing mode, at least until the sealing unit 14b reaches a thermal equilibrium state, in particular with a work environment of the sealing unit 14b. A value of the correction parameter is decreasing after a stopping time of the sealing unit 14b, in particular after a stopping time of the sealing mode or a starting time of an idle state of the sealing unit 14b. A value of the correction parameter is decreasing after a stopping time of the sealing unit 14b, in particular after a stopping time of the sealing mode or a starting time of the idle state, at least until the sealing unit 14b reaches a thermal equilibrium state, in particular with the work environment of the sealing unit 14b. A value of the correction parameter is positive.

The control unit 18a is configured for automatically adjusting a value of the temperature difference depending on the operating speed of the sealing unit 14b. Preferably, the temperature difference has a linear dependence on the operating speed of the sealing unit 14b. For example, the temperature difference is initially set by a user for a specific operating speed of the sealing unit 14b, so that the control unit is configured to adjust the temperature difference automatically according to a linear dependence of the temperature difference on the operating speed of the sealing unit 14b. The operating speed of the sealing unit 14b corresponds in particular to the sealing speed of the sealing unit 14b, for example a number of packages sealed in a specific time period, a number of created sealing seams in a specific time period or the like.

Figure 6 shows an exemplary function profile of the correction parameter applied by the control unit. The y-axis is the upper graph of figure 6 exhibits a value of the correction parameter. The x-axis in the upper graph of figure 6 exhibits the time.

The lower graph shown in figure 6 exhibits the operation state of the sealing unit 14b, in particular whether the sealing unit 14b is in a sealing mode or in an idle state. The x-axis of the lower graph of figure 6 exhibits the time. The x-axis of the lower graph in figure 6 corresponds to the x-axis of the upper graph in figure 6. The y-value in the lower graph of figure 6 equals 1, when the sealing unit 14b is in a sealing mode, in particular during sealing of a package or packaging material 12b. The y-value in the lower graph shown in figure 6 equals 0, when the sealing unit 14b is the idle state of the sealing unit 14b.

## Claims

1. Sealing device (10a) for sealing a package or a packaging material , comprising: at least one sealing unit (14a), which is implemented as a hot-air sealing unit (14a); at least one heating unit (16a) for generating heat for the at least one sealing unit (14a); and a control unit (18a) for controlling at least the heating unit (16a), **characterized in that** the control unit (18a) is configured to automatically adjust a value of a correction parameter that influences the setpoint temperature of the heating unit (16a) depending on an operation state of the sealing unit (14a), with a value of the correction parameter at least temporarily decreasing after a starting time of the sealing unit (14a).

2. Sealing device (10a) according to claim 1, **characterized in that** the control unit (18a) is configured for automatically adjusting a value of the correction parameter, using a function that depends on an operation state of the sealing unit (14a).

3. Sealing device (10a) according to claim 2, **characterized in that** the control unit (18a) is configured for automatically adjusting a value of the correction parameter by using a leaky integrator equation.

4. Sealing device (10a) according to one of the preceding claims, **characterized in that** the control unit (18a) is configured for determining a value of the correction parameter by a temperature difference, a heating-up time and/or a cooling-down time.

5. Sealing device (10a) according to one of the preceding claims, **characterized in that** the correction parameter is a temperature correction variable to the setpoint temperature of the heating unit (16a).

6. Sealing device (10a) according to one of the preceding claims, **characterized in that** the control unit (18a) is configured for automatically adjusting a value of the correction parameter on the basis of a temperature model regarding the sealing unit (14a), the material to be sealed and/or the machine settings.

7. Packaging machine (20a), in particular vertical form fill sealing machine or horizontal form fill sealing machine, comprising a sealing device (10a) according to one of the preceding claims.

8. Method for operating a sealing device (10a), in particular a sealing device according to one of the claims 1 to 6, the sealing device (10a) comprising: at least one sealing unit (14a), which is implemented as a hot-air sealing unit (14a), and at least one heating unit (16a) for generating heat for the at least one sealing unit (14a), **characterized in that** a value of a correction parameter influencing the setpoint temperature of the heating unit (16a) is automatically adjusted depending on an operation state of the sealing unit (14a), with a value of the correction parameter at least temporarily decreasing after a starting time of the sealing unit (14a).

## Patentansprüche

1. Verschließvorrichtung (10a) zum Verschließen einer Verpackung oder eines Verpackungsmaterials, umfassend: mindestens eine Verschließeinheit (14a), die als Heißluftverschließeinheit (14a) implementiert ist; mindestens eine Heizeinheit (16a) zum Erzeugen von Wärme für die mindestens eine Verschließeinheit (14a); und eine Steuereinheit (18a) zum Steuern mindestens der Heizeinheit (16a), **dadurch gekennzeichnet ist, dass** die Steuereinheit (18a) konfiguriert ist, um einen Wert eines Korrekturparameters, der die Sollwerttemperatur der Heizeinheit (16a) beeinflusst, abhängig von einem Betriebszustand der Verschließeinheit (14a) automatisch anzupassen, wobei ein Wert des Korrekturparameters nach einer Anlaufzeit der Verschließeinheit (14a) mindestens vorübergehend abnimmt.

2. Verschließvorrichtung (10a) nach Anspruch 1,
**dadurch gekennzeichnet, dass** die Steuereinheit (18a) zum automatischen Anpassen eines Werts des Korrekturparameters unter Verwendung einer Funktion, die von einem Betriebszustand der Verschließeinheit (14a) abhängt, konfiguriert ist.

3. Verschließvorrichtung (10a) nach Anspruch 2,
**dadurch gekennzeichnet, dass** die Steuereinheit (18a) zum automatischen Anpassen eines Werts des Korrekturparameters unter Verwendung einer Leckintegrator-Gleichung konfiguriert ist.

4. Verschließvorrichtung (10a) nach einem der vorstehenden Ansprüche, **dadurch gekennzeichnet, dass** die Steuereinheit (18a) zum Bestimmen eines Werts des Korrekturparameters durch eine Temperaturdifferenz, eine Aufheizzeit und/oder eine Abkühlzeit konfiguriert ist.

5. Verschließvorrichtung (10a) nach einem der vorstehenden Ansprüche, **dadurch gekennzeichnet, dass** der Korrekturparameter eine Temperaturkorrekturvariable zu der Sollwerttemperatur der Heizeinheit (16a) ist.

6. Verschließvorrichtung (10a) nach einem der vorstehenden Ansprüche, **dadurch gekennzeichnet, dass** die Steuereinheit (18a) zum automatischen Anpassen eines Werts des Korrekturparameters auf Basis eines Temperaturmodells hinsichtlich der Verschließeinheit (14a), des zu verschließenden Materials und/oder der Maschineneinstellungen konfiguriert ist.

7. Verpackungsmaschine (20a), insbesondere eine vertikale Form-Füll-Verschließmaschine oder eine horizontale Form-Füll-Verschließmaschine, umfassend eine Verschließvorrichtung (10a) nach einem der vorstehenden Ansprüche.

8. Verfahren zum Betreiben einer Verschließvorrichtung (10a), insbesondere einer Verschließvorrichtung nach einem der Ansprüche 1 bis 6, wobei die Verschließvorrichtung (10a) umfasst: mindestens eine Verschließeinheit (14a), die als Heißluftverschließeinheit (14a) ausgebildet ist, und mindestens eine Heizeinheit (16a) zum Erzeugen von Wärme für die mindestens eine Verschließeinheit (14a), **dadurch gekennzeichnet, dass** ein Wert eines Korrekturparameters, der die Sollwerttemperatur der Heizeinheit (16a) beeinflusst, abhängig von einem Betriebszustand der Verschließeinheit (14a) automatisch angepasst wird, wobei ein Wert des Korrekturparameters nach einer Anlaufzeit der Verschließeinheit (14a) mindestens zeitweise abnimmt.

## Revendications

1. Dispositif de scellage (10a) pour sceller un emballage ou un matériau d'emballage, comprenant : au moins une unité de scellage (14a), qui est réalisée comme une unité de scellage à air chaud (14a) ; au moins une unité de chauffage (16a) pour générer de la chaleur pour la au moins une unité de scellage (14a) ; et une unité de commande (18a) pour commander au moins l'unité de chauffage (16a), **caractérisée en ce que** l'unité de commande (18a) est configurée pour ajuster automatiquement une valeur d'un paramètre de correction qui influence la température de consigne de l'unité de chauffage (16a) en fonction d'un état de fonctionnement de l'unité de scellage(14a), avec une valeur du paramètre de correction diminuant au moins temporairement après un temps de démarrage de l'unité de scellage (14a).

2. Dispositif de scellage (10a) selon la revendication 1, **caractérisé en ce que** l'unité de commande (18a) est configurée pour ajuster automatiquement une valeur du paramètre de correction, en utilisant une fonction qui dépend d'un état de fonctionnement de l'unité de scellage (14a).

3. Dispositif de scellage (10a) selon la revendication 2, **caractérisé en ce que** l'unité de commande (18a) est configurée pour ajuster automatiquement une valeur du paramètre de correction en utilisant une équation d'intégrateur à fuite.

4. Dispositif de scellage (10a) selon l'une des revendications précédentes, **caractérisé en ce que** l'unité de commande (18a) est configurée pour déterminer une valeur du paramètre de correction par une différence de température, un temps de chauffage et/ou un temps de refroidissement.

5. Dispositif de scellage (10a) selon l'une des revendications précédentes, **caractérisé en ce que** le paramètre de correction est une variable de correction de la température par rapport à la température de consigne de l'unité de chauffage (16a).

6. Dispositif de scellage (10a) selon l'une des revendications précédentes, **caractérisé en ce que** l'unité de commande (18a) est configurée pour ajuster automatiquement une valeur du paramètre de correction sur la base d'un modèle de température concernant l'unité de scellage (14a), le matériau à sceller et/ou les réglages de la machine.

7. Machine d'emballage (20a), en particulier machine d'emballage verticale ou machine d'emballage horizontale, comprenant un dispositif de scellage (10a) selon l'une des revendications précédentes.

8. Procédé permettant de faire fonctionner un dispositif de scellage (10a), en particulier un dispositif de scellage selon l'une des revendications 1 à 6, le dispositif de scellage (10a) comprenant : au moins une unité de scellage (14a), qui est réalisée sous la forme d'une unité de scellage à air chaud (14a), et au moins une unité de chauffage (16a) pour générer de la chaleur pour la au moins une unité de scellage (14a), **caractérisé en ce qu'**une valeur d'un paramètre de correction influençant la température de consigne de l'unité de chauffage (16a) est automatiquement ajustée en fonction d'un état de fonctionnement de l'unité de scellage (14a), la valeur du paramètre de correction diminuant au moins temporairement après un temps de démarrage de l'unité de scellage (14a).
